(19) Europäisches Patentamt
European Patent Office
Office européen des brevets

(11) **EP 1 433 002 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(21) Anmeldenummer: **02750831.6**

(22) Anmeldetag: **01.08.2002**

(51) Int Cl.:
*G01S 13/87* *(2006.01)*     *G01S 13/44* *(2006.01)*

(86) Internationale Anmeldenummer:
**PCT/DE2002/002848**

(87) Internationale Veröffentlichungsnummer:
**WO 2003/019229 (06.03.2003 Gazette 2003/10)**

(54) **VERFAHREN ZUM BESTIMMEN DER POSITION EINES ZIELOBJEKTES UND NACH DIESEM VERFAHREN BETRIEBENES RADARSYSTEM**

METHOD FOR DETERMINING THE POSITION OF A TARGET OBJECT AND RADAR SYSTEM OPERATING WITH SAID METHOD

PROCEDE POUR DETERMINER LA POSITION D'UN OBJET CIBLE ET SYSTEME RADAR ACTIONNE SELON LEDIT PROCEDE

(84) Benannte Vertragsstaaten:
**DE FR GB IT SE**

(30) Priorität: **21.08.2001 DE 10141009**

(43) Veröffentlichungstag der Anmeldung:
**30.06.2004 Patentblatt 2004/27**

(73) Patentinhaber: **SIEMENS AKTIENGESELLSCHAFT 80333 München (DE)**

(72) Erfinder:
• **PREIS, Christian 84095 Furth (DE)**
• **TOENS, Matthias 93049 Regensburg (DE)**

(56) Entgegenhaltungen:
**WO-A-00/40999**      **US-A- 5 598 163**
**US-A- 5 949 365**

EP 1 433 002 B1

## Beschreibung

Die Erfindung betrifft ein Verfahren zum Bestimmen der Position eines Zielobjektes und ein nach diesem Verfahren betriebenes Radarsystem.

Zum berührungslosen Erfassen von Objekten sind verschiedene Arten von Sensoren bekannt, die auf unterschiedlichen physikalischen Prinzipien beruhen. Die Radartechnik ist insbesondere für den rauen Einsatz im Automobil oder der Industrie besonders geeignet. Sie ermöglicht ein berührungsloses Erfassen der Anwesenheit, der Entfernung, der Geschwindigkeit und auch der Beschaffenheit von Objekten. In der Kraftfahrzeugtechnik werden bisweilen eine Vielzahl von Einzel-Radarsensoren eingesetzt, um die gesamte Fahrzeugumgebung zu erfassen. Jeder einzelne Radarsensor liefert dabei als Information die Entfernung, die Geschwindigkeit und Beschaffenheit der Objekte in seinem Überwachungsbereich. Um die exakte Position eines Objektes aus den Informationen der einzelnen Sensoren zu ermitteln, gibt es verschiedene Verfahren, wobei immer die Informationen von mindestens zwei Sensoren notwendig sind.

Ein bekanntes Verfahren ist die Triangulation, bei der man aus den Abstandsinformationen von mindestens zwei Sensoren mit unterschiedlicher Einbauposition den Ort des Objektes bestimmt. Dieses Verfahren ist jedoch relativ ungenau, insbesondere wenn der Abstand zwischen Sensoren und Objekt groß gegen den Abstand der Sensoren untereinander (Triangulationsbasis) ist.

Ein weiteres, häufig in der Radartechnik verwendetes Verfahren ist das Amplituden-Monopulsverfahren (zum Beispiel: J. Detlefsen; Radartechnik, Springer, 1989, S. 107-111 ; siehe auch US-A-5,949,365). Dabei wird der Winkel zwischen Radarsensoren und dem Objekt aus dem Verhältnis der Signalamplituden zweier verschiedener Sensoren bestimmt. Das Amplitudenverhältnis hängt hier nur von dem Ablagewinkel zwischen der Achse der Antennendiagramme der beiden Sensoren und der Achse zwischen dem Objekt und den Radarsensoren ab, es ist also insbesondere abstandsunabhängig. Dies gilt jedoch nur dann, wenn die beiden Radarsensoren denselben Einbauort aufweisen und lediglich ihre Antennenkeulen im Winkel gegeneinander versetzt sind (mehrstrahlige Radarsensoren).

Der Erfindung liegt die Aufgabe zugrunde, ein Verfahren der eingangs genannten Art zu schaffen, das es ermöglicht, die Amplituden-Monopulsmethode bei Radarsensoren mit unterschiedlichen Einbauorten einzusetzen.

Die Aufgabe der Erfindung wird durch ein Verfahren nach Anspruch 1 und ein Radarsystem nach Anspruch 8 gelöst. Bei dem Verfahren zum Bestimmen der Position eines Zielobjektes mit einem Radarsystem, das nach dem Amplituden-Monopulsverfahren betrieben wird, werden die Signale von mindestens zwei räumlich getrennten Sende- und Empfangseinheiten ausgewertet, aus diesen Signalen wird der radiale Abstand von den einzelnen Sende- und Empfangseinheiten zu dem Zielobjekt bestimmt, es wird das Verhältnis der Amplituden der beiden Signale bestimmt, und aus den radialen Abständen und dem Verhältnis der Amplituden wird die Position des Zielobjektes berechnet.

Zweckmäßige Weiterbildungen der Erfindung sind in den Unteransprüchen niedergelegt.

Die Vorteile der Erfindung liegen insbesondere darin, dass sie es unter anderem in der Automobiltechnik ermöglicht, einerseits zur Überdeckung der gesamten Fahrzeugumgebung eine größere Anzahl von Radarsensoren rund um das Fahrzeug anzubringen, und andererseits erlaubt, kostenaufwendige mehrstrahligen Sensoren zu vermeiden. Nur damit war bislang eine Anwendung des bekannten Monopulsverfahrens möglich. Außerdem ergibt die Erfindung viel genauere Messergebnisse als das Triangulationsverfahren, das für viele Anwendungen deshalb zu ungenau ist, weil die Triangulationsbasis maximal den Abmessungen des Fahrzeuges entsprechen kann.

Ausführungsbeispiele der Erfindung werden im folgenden anhand der Zeichnungen erläutert. Es zeigen:

Figur 1    ein schematisch dargestelltes Kraftfahrzeug, das mit mehreren Sende- und Empfangseinheiten eines erfindungsgemäßen Radarsystems versehen ist;

Figur 2    eine winkelabhängige Darstellung von Radarantennencharakteristiken zur Erläuterung des Monopulsverfahrens;

Figur 3    zwei Zielobjekte und ihre relative Lage bezüglich zweier Sende- und Empfangseinheiten des Radarsystems nach Figur 1 oder 6 in unterschiedlicher Position;

Figur 4    ein Zielobjekt und seine relative Lage bezüglich zweier Sende- und Empfangseinheiten des Radarsystems nach Figur 1 oder 6;

Figur 5    eine Blockdiagrammdarstellung von bei dem erfindungsgemäßen Monopulsverfahren mit räumlich getrennten Sende- und Empfangseinheiten durchgeführten Berechnungen;

Figur 6    ein Radarsystem gemäß der Erfindung in Blockdiagrammdarstellung, und

Figur 7    ein Ablaufdiagramm eines bei dem erfindungsgemäßen Verfahren abgearbeiteten Programms.

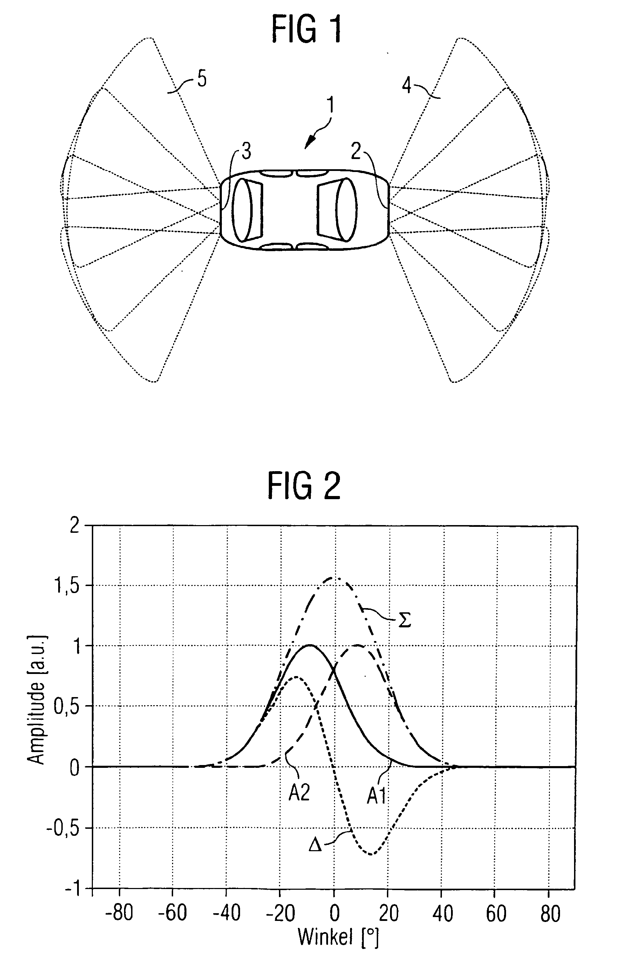

Ein Kraftfahrzeug 1 (Figur 1) ist in seinem vorderen Stoßstangenbereich 2 und in seinem hinteren Stoßstangenbereich 3 jeweils mit vier Sende- und Empfangseinheiten oder Radarsensoren (beide Bezeichnungen sind hier gleichbedeutend) ausgerüstet, die kegelförmige Strahlenkeulen 4 beziehungsweise 5 aussenden. Trifft ein Radarstrahl auf ein Objekt, das ihn reflektiert, so wird der reflektierte in den Sende- und Empfangseinheiten empfangen und nachfolgend ausgewertet.

Bei dem bekannten Amplituden-Monopulsverfahren werden zwei oder mehr der im Winkel gegeneinander versetzten Antennen- oder Strahlenkeulen 4 oder 5 verwendet. Aus dem von einem Objekt zurück empfangenen Signalen wird üblicherweise zum Einen die Summe Σ= A1+A2, zum anderen die Differenz Δ=A1-A2 der Signalamplituden A1 und A2 der beiden Radarsignale gebildet (Figur 2). Das Verhältnis der Differenz zu der Summe der Signalamplituden M =Δ/Σ hängt nur von dem Ablagewinkel zwischen der Achse der beiden Antennendiagramme und der sich zwischen dem Ziel und der Sende- und Empfangseinrichtung erstreckenden Achse ab. Insbesondere hängt dieser Wert M = Δ/Σ nicht von dem Abstand des Ziels von der Sendeeinrichtung oder von den Reflektionseigenschaften des Zielobjektes ab.

Wird das Amplitudenverhältnis M einmal für ein Objekt bei festem Abstand als Funktion des Ablagewinkels vermessen und in einer Tabelle abgelegt, so kann später der Ablagewinkel für jedes andere Objekt im gemeinsamen Überwachungsbereich der beiden Antennenkeulen in jeder Entfernung durch Vergleich des gemessenen Amplitudenverhältnisses M mit den tabellierten Werten ohne weitere Berechnungen bestimmt werden. Zusammen mit der Abstandsinformation ist damit die Position des Ziels eindeutig bestimmt.

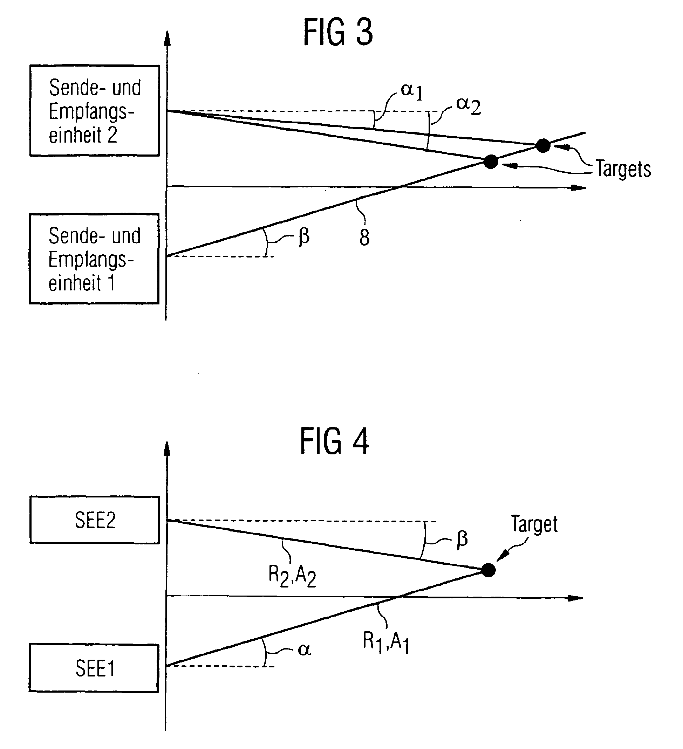

Dies gilt jedoch nur dann, wenn die beiden Antennendiagramme denselben Ursprung aufweisen. Andernfalls hängt das Amplitudenverhältnis von der absoluten Lage des Objektes ab, da ein Objekt bezüglich zweier räumlich getrennter Sende- und Empfangseinheiten SEE1 und SEE2 unterschiedliche Ablagewinkel einnimmt (Figur 3). Zwei Zielobjekte oder Targets liegen auf einer Linie 8 konstanten Winkels β zu der Achse des Antennendiagramms der Sende- und Empfangseinheit 1, während sie zu der Sende- und Empfangseinheit 2 auf zwei Linien mit verschiedenen Ablagewinkeln $\alpha_1$ und $\alpha_2$ liegen. In diesem Fall müsste das Amplitudenverhältnis für jeden Punkt des gemeinsamen Überwachungsbereiches tabelliert werden, um aus dem gemessenen Amplitudenverhältnis die Objektposition bestimmen zu können. Dies wäre aber ein äußerst aufwendiger und damit sehr unpraktikabler Weg.

Mit dem erfindungsgemäßen Verfahren hingegen wird die Objektposition aus den Abstands- und Amplitudeninformationen räumlich getrennter Sende- und Empfangseinheiten ermittelt (Figur 3 und 4). Die Grundidee des Verfahrens besteht darin, die Objektkoordinaten zu variieren, bis das aus den bekannten Antennendiagrammen der einzelnen Sende- und Empfangseinheiten berechnete Amplitudenverhältnis M mit dem gemessenen Amplitudenverhältnis übereinstimmt.

Die Amplituden der in den Sende- und Empfangseinheiten SEE1 und SEE2 empfangenen Signalen hängen in guter Näherung nur von dem Objektabstand $R_1$ oder $R_2$ und dem Winkel $\alpha$ beziehungsweise $\beta$ ab. Dies setzt voraus, dass der Radar-Rückstreuquerschnitt nicht stark vom Beobachtungswinkel abhängt. Zudem sind in der Regel die Abstände zwischen den Sende- und Empfangseinheiten und den Zielobjekten groß gegen die Abstände zwischen den einzelnen Sende- und Empfangseinheiten, sodass die Winkel $\alpha$ und $\beta$ nicht allzu verschieden sind. Darüber hinaus ist aus der Radartheorie (Radargleichung) allgemein bekannt, dass der Antennenablagewinkel und der Objektabstand in die erfasste Signalamplitude als unabhängige Größen eingehen. Für das Amplitudenverhältnis M gilt somit:

$$M = \frac{f_1(R_1)g_1(\alpha) - f_2(R_2)g_2(\beta)}{f_1(R_1)g_1(\alpha) + f_2(R_2)g_2(\beta)} \qquad (I)$$

Hierbei ist $g_i(\varphi)$ die winkelabhängige Antennencharakteristik der i-ten Sende- und Empfangseinheit, und $f_i(R_i)$ ist deren radiale Abhängigkeit der Signalamplitude. Prinzipiell hängen beide Größen vom Radarrückstreuquerschnitt des betrachteten Zielobjektes ab. In dem Amplitudenverhältnis M fallen diese objektspezifischen Abhängigkeiten jedoch heraus. Daher genügt es für jeden Sensor die Antennencharakteristik $g_i(\varphi)$ und die radiale Abhängigkeit der Signalamplitude $f_i(R_i)$ für ein Zielobjekt zu messen und in einer Tabelle abzulegen.

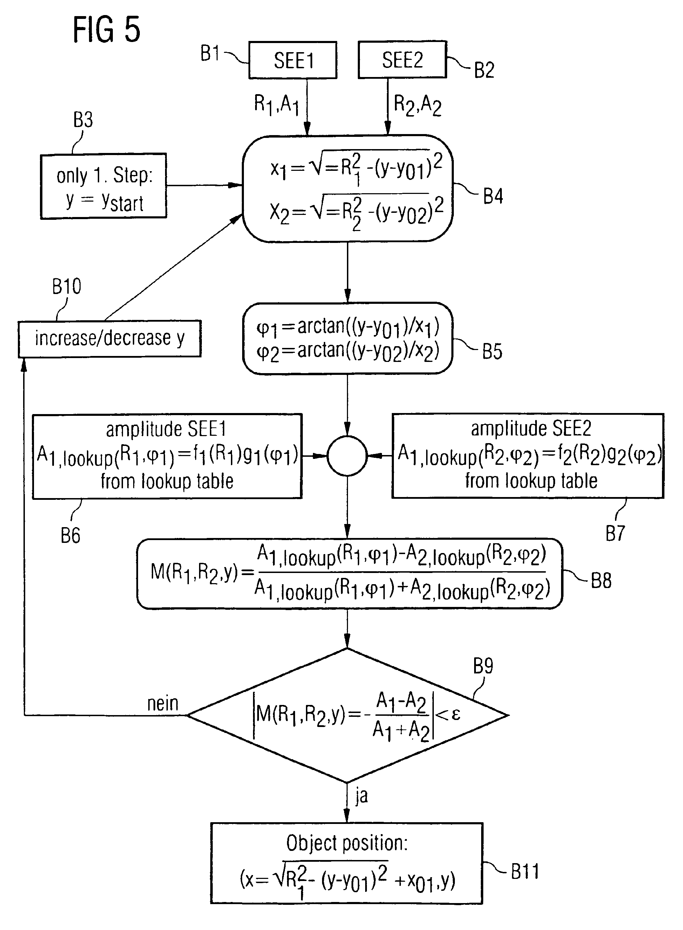

Aus den tabellierten Werten kann, wie im Folgenden gezeigt und in Figur 5 diagrammartig sichtbar gemacht ist, die Position jedes anderen Objekts aus den radialen Informationen zweier Sensoren sowie dem gemessen Amplitudenverhältnis bestimmt werden.

Ausgangspunkt sind die Messgrößen $R_1$, $R_2$ und $M=(A_1-A_2)/(A_1+A_2)$, das heißt die radialen Abstände des Zielobjektes bezüglich der Sende- und Empfangseinheiten 1 und 2 sowie das Amplitudenverhältnis M. Den entsprechenden Tabellen können sofort die Werte $f_1(R_1)$ und $f_2(R_2)$ entnommen werden. Somit sind nur noch die Winkel $\varphi_1\equiv\alpha$ und $\varphi_2\equiv\beta$ zu bestimmen. Mit Hilfe der geometrischen Beziehung

$$R_i = \sqrt{(x - x_{0i})^2 + (x - x_{0i})^2} \qquad (II)$$

und

$$\varphi_i = \arctan\left(\frac{y - y_{0i}}{x - x_{0i}}\right) \qquad\qquad (\text{III})$$

wobei $x_{0i}$ und $y_{0i}$ die Koordinaten der i-ten Sende- und Empfangseinheit sind, lässt sich das Amplitudenverhältnis folgendermaßen ausdrücken:

$$M(R_1, R_2, y) = \frac{f_1(R_1)g_1\left[\arctan\sqrt{(y-y_{01})^2/(R_1{}^2-(y-y_{01})^2)}\right] - f_2(R_2)g_2\left[\arctan\sqrt{(y-y_{02})^2/(R_2{}^2-(y-y_{02})^2)}\right]}{f_1(R_1)g_1\left[\arctan\sqrt{(y-y_{01})^2/(R_1{}^2-(y-y_{01})^2)}\right] + f_2(R_2)g_2\left[\arctan\sqrt{(y-y_{02})^2/(R_2{}^2-(y-y_{02})^2)}\right]}$$

$$(\text{IV})$$

Setzt man in diese Gleichung die Messwerte für $R_1$, $R_2$ ein und variiert y, bis der berechnete Wert des Amplitudenverhältnisses M=M($R_1$,$R_2$,y) mit dem gemessenen Wert übereinstimmt, so erhält man die y-Koordinate des Zielobjekts. Die x-Koordinate lässt sich mit Hilfe der Beziehung

$$x = \sqrt{R_i{}^2 - (y - y_{0i})^2} + x_{0i} \qquad\qquad (\text{V})$$

bestimmen.

In Blöcken B1 und B2 eines Rechendiagramms (Figur 5) werden Abstands- und Amplitudeninformationen der Sende- und Empfangseinheiten SEE1 und SEE2 erfasst. In einem Block B3 wird ein Startwert y=$y_{start}$ bestimmt. In einem Block B4 werden die x-Koordinaten aus den Abstandsinformationen $R_1$, $R_2$, den Sensorkoordinaten und dem aktuellen y-Wert berechnet.

In einem Block B5 werden die Ablagewinkel bezüglich der Sende- und Empfangseinheiten berechnet. In Blocks B6 und B7 werden die Signalamplituden für die beiden Sende- und Empfangseinheiten aus tabellierten Werten für berechnete Ablagewinkel und gemessene Abstände bestimmt. In einem Schritt B8 wird daraus das Amplitudenverhältnis berechnet. In einem Schritt B9 wird das berechnete mit dem gemessenen Amplitudenverhältnis verglichen. Ist der Absolutwert der Differenz nicht kleiner als eine Schranke ε, so wird in einem Schritt B10 abhängig von dem Vergleichsergebnis der y-Wert erhöht oder erniedrigt. Ist die Differenz kleiner als ε, so wird In einem Block B11 die Position des Zielobjekts bestimmt. Damit ist ein Rechendurchlauf beendet.

In den in Figur 5 aufgeführten Gleichungen sind $x_{0i}, y_{0i}$ die Koordinaten der i-ten Sende- und Empfangseinheit, und es gilt $x_1 = x - x_{0i}$.

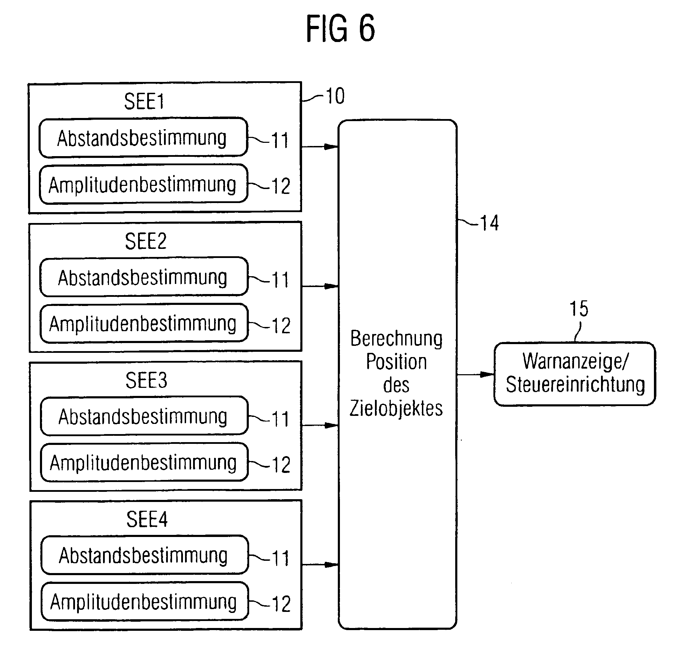

Ein Radarsystem 10 ist mit vier Einzelsensoren oder Sende-und Empfangseinheiten SEE1 bis SEE4 versehen, die je eine Abstandsbestimmungseinrichtung 11 und eine Amplitudenbestimmungseinrichtung 12 enthalten (Figur 6). Die von diesen wie vorbeschrieben ermittelten Abstands- und Amplitudeninformationen werden einer Recheneinheit 14 zugeführt, die aus den Informationen die Position des Zielobjekts berechnet und an eine Warnanzeige oder Steuereinrichtung 15 im Kraftfahrzeug übermittelt.

Dient das Radarsystem 10 als Einparkhilfe, wobei die vier Einzelsensoren zum Beispiel im Bereich der hinteren Stoßstange angeordnet sind, so ist die Warnanzeige oder Steuereinrichtung 15 als optische oder akustische Anzeige ausgebildet, die den Fahrer warnt, wenn ein vorgegebener Abstand zu einem Hindernis unterschritten wird. Im Falle, dass das Radarsystem den Abstand im fließenden Verkehr Überwacht, kann die Steuereinrichtung 15 zusätzlich zu dem Warnsignal auch Brems- und Motoreingriffe veranlassen.

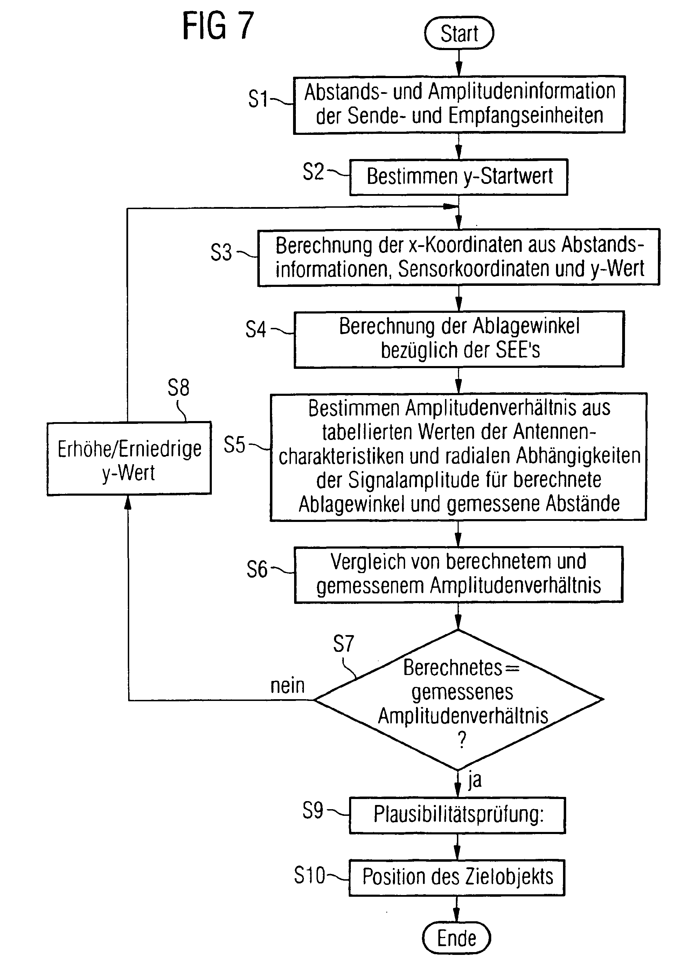

Ein in der Recheneinheit 14 abgearbeitetes Programm schließt folgende, aus Figur 7 ersichtliche Rechenschritte Sn ein. Nach dem

**Start** werden in einem Schritt

**S1:** die Abstands- und Amplitudeninformationen der Sende- und Empfangseinheiten SEE1 ($R_1$, $A_1$), SEE 2 ($R_2$, $A_2$) erfasst. In einem Schritt

**S2:** wird ein Startwert für die y-Koordinate festgelegt. In einem Schritt

**S3:** werden die x-Koordinaten aus den Abstandsinformationen $R_1$, $R_2$ der Sende- und Empfangseinheiten, den Sensorkoordinaten und dem aktuellen γ-Wert berechnet. In einem Schritt

**S4:** werden die Ablagewinkel bezüglich der Sende- und Empfangseinheiten berechnet. In einem Schritt

**S5:**     wird das Amplitudenverhältnis aus den tabellierten Werten der Antennencharakteristiken und den radialen Abhängigkeiten der Signalamplitude für die berechneten Ablagewinkel und die gemessenen Abstände bestimmt. In einem Schritt

**S6:**     werden das berechnete und das gemessene Amplitudenverhältnis miteinander verglichen. In einem Schritt

**S7:**     erfolgt eine Abfrage, ob das berechnete und das gemessene Amplitudenverhältnis übereinstimmen. Ist das Ergebnis ein Nein, so wird in einem Schritt

**S8:**     abhängig von dem Vergleichsergebnis der y-Wert erhöht beziehungsweise erniedrigt. Ist das Ergebnis der Abfrage ein Ja, so erfolgt in einem Schritt

**s9:**     eine Plausibilitätsprüfung: $x(R_1, y) = x(R_2, y)$? . Schließlich wird in einem Schritt

**S10:**    die Position des Zielobjekts (x, y) ausgegeben. Damit ist ein Programmdurchlauf am **Ende.**

Das Programm wird zyklisch wiederholt abgearbeitet.

Das Radarsystem kann auch mit einem Filter mit $R^4$-Charakteristik versehen sein, mit dem die Abstandsabhängigkeit der Signalamplitude der Sensorsignale kompensiert wird.

**Patentansprüche**

1.  Verfahren zum Bestimmen der Position eines Zielobjektes mit einem Radarsystem insbesondere für die Kraftfahrzeugtechnik das aufweist :

    - mindestens zwei an getrennten Einbaupositionen angeordnete Sende- und Empfangseinheiten (SEE1, SEE2),
    - mindestens eine Abstandsbestimmungseinrichtung (11),
    - eine Einrichtung (12) zum Bestimmen des Amplitudenverhältnisses der Sensorsignale der Sende- und Empfangseinheiten (SEE1, SEE2), und
    - eine Recheneinheit (14) zum Berechnen der Zielobjektsposition aus den radialen Abständen und dem Verhältnis der Amplituden der Sensorsignale,

    wobei das Radarsystem nach dem Amplituden-Monopulsverfahren betrieben wird,
    und wobei

    - die Signale von mindestens zwei räumlich getrennten Sende- und Empfangseinheiten ausgewertet werden,
    - aus diesen Signalen der radiale Abstand von den einzelnen Sende- und Empfangseinheiten zu dem Zielobjekt bestimmt wird,
    - das Verhältnis der Amplituden der beiden Signale bestimmt wird, und
    - aus den radialen Abständen und dem Verhältnis der Amplituden die Position des Zielobjektes berechnet wird.

2.  Verfahren nach Anspruch 1, **dadurch gekennzeichnet,**

    - **dass** das Amplitudenverhältnis aus den Antennendiagrammen und den radialen Abhängigkeiten der Signalamplituden der einzelnen Sende- und Empfangseinheiten berechnet wird, und
    - **dass** die Position des Zielobjektes iterativ aus einem Vergleich des berechneten und des gemessenen Amplitudenverhältnisses bestimmt wird.

3.  Verfahren nach Anspruch 2, **dadurch gekennzeichnet, dass** die Abstandsabhängigkeit der Signalamplitude derart kompensiert wird, dass das Amplitudenverhältnis nur noch von den Ablagewinkeln des Zielobjektes bezüglich der beiden Sende- und Empfangseinheiten abhängt.

4.  Verfahren nach Anspruch 1, **dadurch gekennzeichnet, dass** ein Amplitudenverhältnis in der Form des Verhältnisses der Summe der Amplituden der beiden Signale zu der Differenz der beiden Signale gebildet wird.

5.  Verfahren nach Anspruch 1, **dadurch gekennzeichnet, dass** die Position des Zielobjektes anhand einer Kombination der Signalamplituden von mehr als zwei Sende- und Empfangseinheiten ermittelt wird.

6.  Verfahren nach Anspruch 1, **dadurch gekennzeichnet, dass** die Antennenkeulen der einzelnen Sende- und Empfangseinheiten eine Abtastbewegung durchführen.

**7.** Verfahren nach Anspruch 1, **dadurch gekennzeichnet, dass** die Sende- und Empfangseinheiten Mehrstrahlradarsensoren sind, die nach dem Monopulsverfahren betrieben werden.

**8.** Radarsystem zum Bestimmen der Position eines Zielobjektes, insbesondere für die Kraftfahrzeugtechnik, das aufweist:

- mindestens zwei an getrennten Einbaupositionen angeordnete Sende- und Empfangseinheiten (SEE1, SEE2),
- mindestens eine Abstandsbestimmungseinrichtung (11) zur Bestimmung der radialen Abstände von den einzelnen Sende - und Empfangseinheiten zu dem Zielobjekt,
- eine Einrichtung (12) zum Bestimmen des Amplitudenverhältnisses der Sensorsignale der Sende- und Empfangseinheiten (SEE1, SEE2), und
- eine Recheneinheit (14) zum Berechnen der Zielobjektsposition aus den radialen Abständen und dem Verhältnis der Amplituden der Sensorsignale.

**9.** Radarsystem nach Anspruch 8, **dadurch gekennzeichnet, dass** es mit einem Filter ($R^4$) versehen ist, mit dem die Abstandsabhängigkeit der Signalamplitude der Sensorsignale kompensiert wird.

**10.** Radarsystem nach Anspruch 8, **dadurch gekennzeichnet, dass** es Sende- und Empfangseinheiten aufweist, die als Mehrstrahlradarsensoren ausgebildet sind.

**Claims**

**1.** Method for determining the position of a target object with a radar system, particularly for automotive engineering, which has:

- at least two transceiver units (SEE1, SEE2) arranged at separate installation positions,
- at least one separation determination facility (11),
- a facility (12) for determining the amplitude ratio of the sensor signals of the transceiver units (SEE1, SEE2), and
- a computing unit (14) for calculating the position of the target object from the radial separations and the ratio of the amplitudes of the sensor signals,
whereby the radar system is operated according to the amplitude monopulse method,
and whereby
- the signals from at least two spatially separate transceiver units are evaluated,
- the radial separation of the individual transceiver units with respect to the target object is determined from these signals,
- the ratio of the amplitudes of the two signals is determined, and
- the position of the target object is calculated from the radial separations and the ratio of the amplitudes.

**2.** Method according to claim 1, **characterised in that**

- the amplitude ratio is calculated from the antenna diagrams and the radial dependencies of the signal amplitudes of the individual transceiver units, and that
- the position of the target object is determined iteratively from a comparison of the calculated amplitude ratio and the measured amplitude ratio.

**3.** Method according to claim 2, **characterised in that** the separation dependency of the signal amplitude is compensated for in such a manner that the amplitude ratio then depends only on the angular displacements of the target object with respect to the two transceiver units.

**4.** Method according to claim 1, **characterised in that** an amplitude ratio in the form of the ratio of the sum of the amplitudes of the two signals to the difference between the two signals is formed.

**5.** Method according to claim 1, **characterised in that** the position of the target object is ascertained by using a combination of the signal amplitudes of more than two transceiver units.

**6.** Method according to claim 1, **characterised in that** the antenna lobes of the individual transceiver units perform a scanning movement.

**7.** Method according to claim 1, **characterised in that** the transceiver units are multibeam radar sensors which are operated according to the monopulse method.

**8.** Radar system for determining the position of a target object, particularly for automobile engineering, which has:

- at least two transceiver units (SEE1, SEE2) arranged at separate installation positions,
- at least one separation determination facility (11) for determining the radial separations of the individual transceiver units with respect to the target object,
- a facility (12) for determining the amplitude ratio of the sensor signals of the transceiver units (SEE1, SEE2), and a computing unit (14) for calculating the position of the target object from the radial separations and the ratio of the amplitudes of the sensor signals.

**9.** Radar system according to claim 8, **characterised in that** it is provided with a filter ($R^4$) which is used to compensate for the separation dependency of the signal amplitude of the sensor signals.

**10.** Radar system according to claim 8, **characterised in that** it has transceiver units which are implemented as multibeam radar sensors.

**Revendications**

**1.** Procédé pour déterminer la position d'un objet cible au moyen d'un système radar, destiné en particulier à l'industrie automobile, et comprenant :

- au moins deux unités d'émission et de réception (SEE1, SEE2) disposées à des emplacements de montage séparés,
- au moins un dispositif de détermination de distance (11),
- un dispositif (12) pour la détermination de la relation d'amplitude des signaux de capteur des unités d'émission et de réception (SEE1, SEE2), et
- une unité de calcul (14) pour le calcul de position de l'objet cible à partir des distances radiales et de la relation entre amplitudes des signaux de capteur,

dans lequel le système radar est actionné au moyen de la technique de monoimpulsion d'amplitude,
et dans lequel

- les signaux d'au moins deux unités d'émission et de réception spatialement séparées sont analysés,
- la distance radiale des différentes unités d'émission et de réception à l'objet cible est déterminée à partir de ces signaux,
- la relation entre amplitudes des deux signaux est déterminée, et
- la position de l'objet cible est calculée à partir des distances radiales et de la relation entre amplitudes.

**2.** Procédé selon la revendication 1, **caractérisé en ce que**

- la relation d'amplitude est calculée à partir des diagrammes d'antenne et des variations en fonction de la distance radiale des amplitudes de signal des différentes unités d'émission et de réception, et **en ce que**
- la position de l'objet cible est déterminée itérativement sur la base d'une comparaison de la relation d'amplitude calculée avec la relation d'amplitude mesurée.

**3.** Procédé selon la revendication 2, **caractérisé en ce que** la variation en fonction de la distance de l'amplitude de signal est compensée pour que la relation d'amplitude ne dépende plus que des angles de déviation de l'objet cible relativement aux deux unités d'émission et de réception.

**4.** Procédé selon la revendication 1, **caractérisé en ce qu'**est formée une relation d'amplitude sous la forme du rapport entre la somme des amplitudes des deux signaux et la différence des deux signaux.

**5.** Procédé selon la revendication 1, **caractérisé en ce que** la position de l'objet cible est déterminée à partir d'une combinaison des amplitudes de signal de plus de deux unités d'émission et de réception.

**6.** Procédé selon la revendication 1, **caractérisé en ce que** les faisceaux d'antenne des différentes unités d'émission et de réception exécutent un mouvement de balayage.

**7.** Procédé selon la revendication 1, **caractérisé en ce que** les unités d'émission et de réception sont des capteurs radars multifaisceaux actionnés au moyen de la technique de monoimpulsion.

**8.** Système radar pour déterminer la position d'un objet cible, destiné en particulier à l'industrie automobile, et comprenant :

- au moins deux unités d'émission et de réception (SEE1, SEE2) disposées à des emplacements de montage séparés,
- au moins un dispositif de détermination de distance (11) pour déterminer les distances radiales des différentes unités d'émission et de réception à l'objet cible,
- un dispositif (12) pour la détermination de la relation d'amplitude des signaux de capteur des unités d'émission et de réception (SEE1, SEE2), et
- une unité de calcul (14) pour le calcul de position de l'objet cible à partir des distances radiales et de la relation entre amplitudes des signaux de capteur.

**9.** Système radar selon la revendication 8, **caractérisé en ce qu'**il est pourvu d'un filtre ($R^4$) permettant de compenser la variation en fonction de la distance de l'amplitude des signaux de capteur.

**10.** Système radar selon la revendication 8, **caractérisé en ce qu'**il comprend des unités d'émission et de réception réalisées comme capteurs radars multifaisceaux.

# FIG 1

# FIG 2

## FIG 3

Sende- und
Empfangseinheit 2

$\alpha_1$  $\alpha_2$

Targets

$\beta$  8

Sende- und
Empfangseinheit 1

## FIG 4

SEE2

$\beta$  Target

$R_2, A_2$

$R_1, A_1$

$\alpha$

SEE1

10

## FIG 5

B1 — SEE1  SEE2 — B2

$R_1, A_1$  $R_2, A_2$

B3

only 1. Step:
$y = y_{start}$

B4
$$x_1 = \sqrt{= R_1^2 - (y - y_{01})^2}$$
$$x_2 = \sqrt{= R_2^2 - (y - y_{02})^2}$$

B10
increase/decrease y

B5
$$\varphi_1 = \arctan((y - y_{01})/x_1)$$
$$\varphi_2 = \arctan((y - y_{02})/x_2)$$

amplitude SEE1
$A_{1,lookup}(R_1, \varphi_1) = f_1(R_1) g_1(\varphi_1)$
from lookup table

B6

amplitude SEE2
$A_{1,lookup}(R_2, \varphi_2) = f_2(R_2) g_2(\varphi_2)$
from lookup table

B7

B8
$$M(R_1, R_2, y) = \frac{A_{1,lookup}(R_1, \varphi_1) - A_{2,lookup}(R_2, \varphi_2)}{A_{1,lookup}(R_1, \varphi_1) + A_{2,lookup}(R_2, \varphi_2)}$$

B9
nein
$$\left| M(R_1, R_2, y) = -\frac{A_1 - A_2}{A_1 + A_2} \right| < \varepsilon$$

ja

Object position:
$$\left( x = \sqrt{R_1^2 - (y - y_{01})^2} + x_{01}, y \right)$$

B11

# FIG 6

| SEE1 | ~10 |
| Abstandsbestimmung ~11 | |
| Amplitudenbestimmung ~12 | |

| SEE2 |
| Abstandsbestimmung ~11 |
| Amplitudenbestimmung ~12 |

| SEE3 |
| Abstandsbestimmung ~11 |
| Amplitudenbestimmung ~12 |

| SEE4 |
| Abstandsbestimmung ~11 |
| Amplitudenbestimmung ~12 |

Berechnung Position des Zielobjektes  ~14

Warnanzeige/ Steuereinrichtung  15

## FIG 7

Start

S1 — Abstands- und Amplitudeninformation der Sende- und Empfangseinheiten

S2 — Bestimmen y-Startwert

S3 — Berechnung der x-Koordinaten aus Abstands-informationen, Sensorkoordinaten und y-Wert

S4 — Berechnung der Ablagewinkel bezüglich der SEE's

S8 — Erhöhe/Erniedrige y-Wert

S5 — Bestimmen Amplitudenverhältnis aus tabellierten Werten der Antennen-charakteristiken und radialen Abhängigkeiten der Signalamplitude für berechnete Ablagewinkel und gemessene Abstände

S6 — Vergleich von berechnetem und gemessenem Amplitudenverhältnis

S7 — Berechnetes = gemessenes Amplitudenverhältnis ?

nein

ja

S9 — Plausibilitätsprüfung:

S10 — Position des Zielobjekts

Ende